# EUROPÄISCHE PATENTANMELDUNG

(11) **EP 2 045 611 A1**
(43) Veröffentlichungstag der Anmeldung: **08.04.2009**
(21) Anmeldenummer: 08016409.8
(22) Anmeldetag: 18.09.2008
(51) Int. Cl.: G01S 1/00, H04B 7/185

(54) **Verfahren und Vorrichtung zum effizienten Verteilen von Informationen in einem Satellitennavigationssystem**

(30) Priorität: 26.09.2007 DE 102007046254
(71) Anmelder: Astrium GmbH, 81663 München (DE)
(72) Erfinder: Trautenberg, Hans L., Dr., 85521 Ottobrunn (DE)
(74) Vertreter: Hummel, Adam

(57) **Zusammenfassung**

Die Erfindung betrifft ein Verfahren zum effizienten Verteilen von Informationen in einem Satellitennavigationssystem (10), das ein Satelliten-System, das eine Mehrzahl von Satelliten (12) umfasst, ein Netzwerk von Beobachtungsstationen (14) zum Beobachten von Signalen (16) der Satelliten (12), eine oder mehrere redundante zentrale Prozessierungsstellen (18) zum Auswerten von Beobachtungen der Beobachtungsstationen (14) und zum Erzeugen von Informationen basierend auf den Beobachtungen zum Verteilen an Nutzungssysteme (20), und ein Kommunikationsnetzwerk (22) zum Übermitteln der Beobachtungen von den Beobachtungsstationen (14) an die eine oder die mehreren redundanten zentralen Prozessierungsstellen (18) aufweist, wobei die eine oder mehreren redundanten zentralen Prozessierungsstellen (18) die Informationen (24) an ausgewählte Satelliten (26) senden und jeder der ausgewählten Satelliten (26) nach Empfang der Informationen diese an benachbarte Satelliten (14) sendet.

## Beschreibung

Die Erfindung betrifft ein Verfahren zum effizienten Verteilen von Informationen in einem Satellitennavigationssystem gemäß Anspruch 1 und eine entsprechende Vorrichtung gemäß Anspruch 8.

Satellitensysteme zur weltweiten Navigation (GNSS; GNSS = Global Navigation Satellite System) bzw. Satellitennavigationssysteme werden zur Positionsbestimmung und Navigation auf der Erde und in der Luft eingesetzt. GNSS Systeme, wie beispielsweise das im Aufbau befindliche europäische Satellitennavigationssystem (im Folgenden auch als Galileo-System oder kurz Galileo bezeichnet) weisen ein, eine Mehrzahl von Satelliten umfassendes Satelliten-System, ein mit einer oder mehreren zentralen Prozessierungsstellen verbundenes erdfestes Empfangseinrichtungs-System von Beobachtungsstationen (Bodeninfrastruktur) sowie Nutzungssysteme auf, welche die von den Satelliten per Funk übermittelten Satellitensignale insbesondere zur Navigation auswerten und nutzen. In einem Satellitennavigationssystem werden fortlaufend Informationen zwischen den Satelliten und der Bodeninfrastruktur sowie innerhalb der Komponenten der Bodeninfrastruktur ausgetauscht, um den sicheren und kontinuierlichen Betrieb des Satellitennavigationssystems zu gewährleisten. Besonders wichtig ist hierbei, dass Informationen bezüglich der Verfügbarkeit des Systems ohne größere zeitliche Verzögerungen bei den Nutzungssystemen ankommen, um Benutzer beispielsweise über fehlerhafte Signale zu warnen, welche die genaue Detektion der Position eines Nutzers beeinträchtigen könnten.

Eine genaue Positionsdetektion erfordert sowohl lokale als auch globale Integrität im Satellitennavigationssystem. Integrität bedeutet insbesondere, dass einerseits das Satellitennavigationssystem imstande ist, einen Nutzer innerhalb einer bestimmten Zeitspanne zu warnen, wenn Teile des Systems nicht für die Navigation benutzt werden sollen, beispielsweise bei Ausfall oder Verhalten außerhalb der Spezifikation oder Vorhersagen von Systemkomponenten, und dass andererseits der Nutzer den Navigationsdaten, die er über Satellitennavigationssignale von den Satelliten des Systems erhält, vertrauen kann, insbesondere sich auf die Genauigkeit der empfangenen Navigationsdaten verlassen kann.

Bekannte Integritätskonzepte sind das von Galileo, vom Wide Area Augmentation System (WAAS) und European Geostationary Navigation Overlay Service (EGNOS). Diese Integritätskonzepte erfordern eine sehr umfangreiche Bodeninfrastruktur, um zum einen Fehler in den Navigationssignalen festzustellen und dann den Benutzer rechtzeitig zu warnen. Die Bodeninfrastruktur ist aus mehren Gründen jeweils sehr aufwendig:
a) Um Fehler in den Navigationssignalen feststellen zu können, wird bei den bisherigen Konzepten jeweils ein feinmaschiges Netzwerk von Beobachtungsstationen benötigt.
b) Um die Beobachtungen der Beobachtungsstation an einer zentralen Stelle auswerten zu können, wird ein Echtzeit-Kommunikationsnetzwerk zwischen den Beobachtungsstationen und der zentralen Prozessierungsstelle benötigt.
c) Die an der zentralen Prozessierungsstelle ermittelte Information wird weltweit über ein Kommunikationsnetzwerk verteilt, um dann vom Boden über ausgewählte Satelliten an die Endbenutzer verteilt zu werden.

Aufgabe der vorliegenden Erfindung ist es daher, ein Verfahren und eine Vorrichtung zum effizienten Verteilen von Informationen in einem Satellitennavigationssystem zu schaffen.

Diese Aufgabe wird durch ein Verfahren zum effizienten Verteilen von Informationen in einem Satellitennavigationssystem mit den Merkmalen nach Anspruch 1 und eine entsprechende Vorrichtung mit den Merkmalen nach Anspruch 8 und gelöst. Weitere Ausgestaltungen der Erfindung sind Gegenstand der abhängigen Ansprüche.

Ein wesentlicher Gedanke der Erfindung besteht darin, das anspruchsvolle Kommunikationsnetzwerk zur weltweiten Verteilung der von einer oder mehreren zentralen Prozessierungsstellen ermittelten Information aus der Systemarchitektur zu entfernen, um so die Bodeninfrastruktur zu vereinfachen und dadurch eine effiziente Informationsverteilung zu ermöglichen. Ein Ansatz für die Verteilung von Information an Endbenutzer des Satellitennavigationssystems besteht nun gemäß der Erfindung darin, zu verteilende Informationen direkt von einer zentralen Prozessierungsstelle an ausgewählte Satelliten zu senden und die Informationen von Satellit zu Satellit weiterzureichen, bis schließlich ausreichend viele Satelliten die Informationen an Nutzungssysteme senden können, um sicherzustellen, dass den Nutzungssystemen die Informationen insbesondere zur Integrität des Satellitennavigationssystems mit einer ausreichend hohen Kontinuität korrekt zur Verfügung gestellt werden. Die Erfindung bietet neben der wesentlich effizienteren Informationsverteilung im Vergleich zu bekannten Satellitennavigationssystemen den Vorteil, dass Bodenkommunikationsnetzwerke, die aufwendig zu betrieben sind, vereinfacht, insbesondere reduziert werden können. Unter einem Bodenkommunikationsnetzwerk ist in diesem Zusammenhang auch ein Kommunikationsnetzwerk, welches neben Kabeln und Richtfunkstrecken auch Kommunikation über geostationäre Satelliten beinhaltet, zu verstehen.

Gemäß einer Ausführungsform der Erfindung ist ein Verfahren zum effizienten Verteilen von Informationen in einem Satellitennavigationssystem vorgesehen, das ein Satelliten-System, das eine Mehrzahl von Satelliten umfasst, ein Netzwerk von Beobachtungsstationen zum Beobachten von Signalen der Satelliten, eine zentrale Prozessierungsstelle zum Auswerten von Beoachtungen der Beobachtungsstationen und zum Erzeugen von Informationen basierend auf den Beobachtungen zum Verteilen an Nutzungssysteme, und ein Echtzeit-Kommunikationsnetzwerk zum Übermitteln der Beobachtungen von den Beobachtungsstationen an die zentrale Prozessierungsstelle aufweist.

Die zentrale Prozessierungsstelle sendet die Informationen an ausgewählte Satelliten und jeder der ausgewählten Satelliten sendet nach Empfang der Informationen diese an benachbarte Satelliten.

Dadurch können die Informationen effizient im Satellitennavigationssystem verteilt werden. Vor allem kann die benötigte Bodeninfrastruktur reduziert und damit vereinfacht werden.

Gemäß einer weiteren Ausführungsform der Erfindung können die ausgewählten Satelliten eine Untermenge von direkt von der zentralen Prozessierungsstelle sichtbaren Satelliten aus der Mehrzahl von Satelliten sein.

Weiterhin kann gemäß einer Ausführungsform der Erfindung ein ausgewählter Satellit nach Empfang der Informationen diese gleichzeitig an alle Satelliten senden, die vom ausgewählten Satelliten aus direkt sichtbar sind. Dadurch wird der Zeitbedarf für die Informationsverteilung möglichst gering gehalten.

Ein ausgewählter Satellit kann gemäß einer weiteren Ausführungsform der Erfindung die empfangenen Informationen über eine Antenne aussenden, die eine Antennencharakteristik mit einem Maximum in genau oder zirka den Richtungen hat, in welchen die benachbarten Satelliten am weitesten entfernt sind. Im Unterschied zu einer hochdirektiven Antenne kann dadurch eine effiziente Informationsverteilung an benachbarte Satelliten mit so geringem technischen Aufwand wie möglich erfolgen.

Gemäß einer Ausführungsform der Erfindung kann ein ausgewählter Satellit die empfangenen Informationen über eine Antenne aussenden, die auf der Erdseite des Satelliten angebracht ist. Dadurch wird eine Informationsverteilung an benachbarte Satelliten ermöglicht, die etwa die gleiche Orbithöhe wie der die Informationen aussendende Satellit besitzen.

Eine weitere Effizienzsteigerung lässt sich erzielen, indem gemäß einer Ausführungsform der Erfindung ein ausgewählter Satellit die empfangenen Informationen über mehrere Antennen aussendet. Dadurch können Informationen auch an benachbarte Satelliten verteilt werden, die unterschiedliche Orbithöhen aufweisen, insbesondere vom Orbit der die Informationen aussendenden Satelliten unterschiedliche Orbithöhen besitzen.

Es kann auch gemäß einer Ausführungsform der Erfindung jede Beobachtungsstation ein empfangenes Satellitensignal oder mehrere Satellitensignale oder alle empfangbaren Satellitensignale des Satellitensystems auswerten und Informationen über die Auswertung an alle direkt sichtbaren Satelliten senden, und jeder Satellit kann anhand der empfangenen Informationen seine eigene Integritätsinformation berechnen.

Durch die Berechnung von Integritätsinformationen in jedem empfangenden Satelliten kann eine zentrale Ermittlung der Integritätsinformation und entsprechende Verteilung an die Satelliten entfallen. Dadurch kann das Kommunikationsnetzwerk zur Verteilung von Informationen an die Satelliten weiter vereinfacht werden, da es nur noch derart ausgelegt werden muss, dass die Orbits und Uhrparameter der Satelliten bestimmt werden können, wodurch die Echtzeitanforderungen an das Netzwerk weiter reduziert werden können.

Die Erfindung betrifft ferner gemäß einer weiteren Ausführungsform eine Vorrichtung zum effizienten Verteilen von Informationen in einem Satellitennavigationssystem, das ein Satelliten-System, das eine Mehrzahl von Satelliten umfasst, ein Netzwerk von Beobachtungsstationen zum Beobachten von Signalen der Satelliten, eine zentrale Prozessierungsstelle zum Auswerten von Beoachtungen der Beobachtungsstationen und zum Erzeugen von Informationen basierend auf den Beobachtungen zum Verteilen an Nutzungssysteme, und ein Echtzeit-Kommunikationsnetzwerk zum Übermitteln der Beobachtungen von den Beobachtungsstationen an die zentrale Prozessierungsstelle aufweist.

Die zentrale Prozessierungsstelle ist ferner ausgebildet, die Informationen an ausgewählte Satelliten zu senden und jeder der ausgewählten Satelliten ist ausgebildet, nach Empfang der Informationen diese an benachbarte Satelliten zu senden.

Gemäß einer Ausführungsform der Erfindung können die ausgewählten Satelliten eine Untermenge von direkt von der zentralen Prozessierungsstelle sichtbaren Satelliten aus der Mehrzahl von Satelliten sein.

Ferner kann gemäß einer Ausführungsform der Erfindung ein ausgewählter Satellit ausgebildet sein, nach Empfang der Informationen diese gleichzeitig an alle Satelliten zu senden, die vom ausgewählten Satelliten aus direkt sichtbar sind.

Ein ausgewählter Satellit kann gemäß einer weiteren Ausführungsform der Erfindung auch ausgebildet sein, die empfangenen Informationen über eine Antenne auszusenden, die eine Antennencharakteristik mit einem Maximum in genau oder zirka den Richtungen hat, in welchen die benachbarten Satelliten am weitesten entfernt sind. Es kann auch sein, dass das Maximum der Antennencharakteristik nur bezüglich der Elevation entsprechend der Entfernung zu den anderen Satelliten angepasst ist.

Schließlich kann ein ausgewählter Satellit auch gemäß einer Ausführungsform der Erfindung ausgebildet sein, die empfangenen Informationen über eine Antenne auszusenden, die auf der Erdseite des Satelliten angebracht ist.

Gemäß einer weiteren Ausführungsform der Erfindung kann ein ausgewählter Satellit auch ausgebildet sein, die empfangenen Informationen über mehrere Antennen auszusenden.

Bei der Vorrichtung kann gemäß einer Ausführungsform der Erfindung jede Beobachtungsstation ausgebildet sein, ein empfangenes Satellitensignal oder mehrere Satellitensignale oder alle empfangbaren Satellitensignale des Satellitensystems auszuwerten und Informationen über die Auswertung an alle direkt sichtbaren Satelliten zu senden, und jeder Satellit kann ausgebildet sein, anhand der empfangenen Informationen seine eigene Integritätsinformation und/oder Integritätsinformationen für andere Satelliten zu berechnen.

In einer weiteren Ausführungsform betrifft die Erfindung einen Satelliten, der zum Einsatz mit einer Vorrichtung nach der Erfindung derart ausgebildet ist, dass er nach Empfang von Informationen von einer zentralen Prozessierungsstelle diese an benachbarte Satelliten über eine dafür vorgesehen Antenne aussenden kann.

Bei dem Satelliten kann gemäß einer Ausführungsform der Erfindung die dafür vorgesehene Antenne eine Hornantenne sein, die bei einer speziellen Anregung in ihrem Zentrum ein Minimum in der Antennencharakteristik und Maxima in genau oder zirka den Richtungen aufweist, in denen benachbarte Satelliten am weitesten vom Satelliten entfernt sind.

Weiterhin kann gemäß einer Ausführungsform der Erfindung die zum Aussenden der von der zentralen Prozessierungsstelle empfangenen Information vorgesehene Antenne auf der Erdseite des Satelliten angebracht sein.

Bei einer Ausführungsform der Erfindung können Sonnenkollektoren des Satelliten derart ausgebildet sein, dass sie das Senden und Empfangen von Informationen über die die zum Aussenden der von der zentralen Prozessierungsstelle empfangenen Information vorgesehenen Antenne nicht behindern.

Schließlich kann der Satellit gemäß einer weiteren Ausführungsform der Erfindung mehrere zum Aussenden der von der zentralen Prozessierungsstelle empfangenen Information vorgesehene Antennen aufweisen, welche die Kommunikation mit Satelliten auf anderen Orbithöhen ermöglichen.

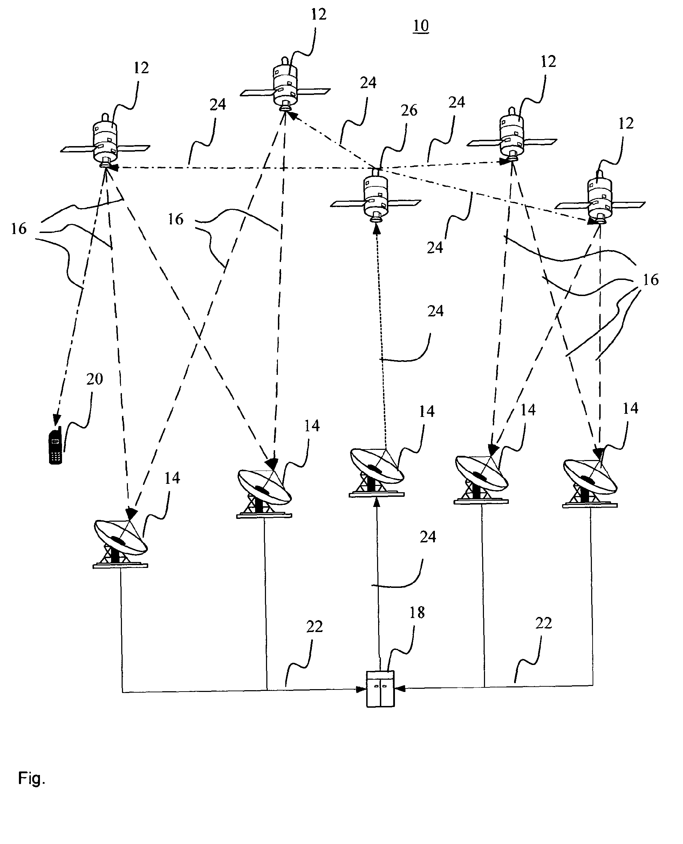

Weitere Vorteile und Anwendungsmöglichkeiten der vorliegenden Erfindung ergeben sich aus der nachfolgenden Beschreibung in Verbindung mit dem in der einzigen Zeichnung dargestellten Ausführungsbeispiel. Die einzige Zeichnung zeigt in der Fig. eine Vorrichtung zum effizienten Verteilen von Informationen in einem Satellitennavigationssystem gemäß einem Ausführungsbeispiel der vorliegenden Erfindung.

Im Folgenden können gleiche und/oder funktional gleiche Elemente mit den gleichen Bezugszeichen versehen sein.

In der Fig. Ist ein Satellitennavigationssystem 10 mit mehreren Satelliten 12 und 16 sowie einem Netzwerk von Beobachtungsstationen 14 dargestellt. Das Netzwerk der Beobachtungsstationen 14 bildet zusammen mit einer zentralen Prozessierungsstelle 18 für Beobachtungen der Beobachtungsstationen 14 eine erdfeste Empfangseinrichtung für die von den Satelliten 12 ausgesandten Satellitensignale, die Parameter des aussendenden Satelliten aufweisen wie die Uhrzeit der hochgenauen Uhr des Satelliten zum Zeitpunkt des Aussendens des Signals, eine eindeutige Satellitenkennung, Daten zum Orbit des Satelliten, Integritätswarnungen und weitere Informationen, die insbesondere für die Positionsbestimmung durch das Satellitennavigationssystem 10 wesentlich sind. Die Erfindung offenbart auch den Fall mehrerer redundanter zentraler Prozessierungsstellen (18). Im Weiteren wird die Erfindung bei dem Fall der einen zentralen Prozessierungsstelle (18) beschrieben. Die Erfindung soll darauf allerdings nicht beschränkt sein.

Das Satellitennavigationssystem 10 ist für die Nutzung durch Nutzungssysteme 20 ausgelegt, die beispielsweise mobile Navigationsgeräte sind. Ein Nutzungssystem 20 wertet empfangene Satellitensignale 16 bekanntermaßen zum Festellen der Position des Nutzungssystems 20 aus. Sofern ein Signal eines bestimmten Satelliten eine Integritätswarnung enthält, weiß das Nutzungssystem, dass dieses Signal nicht für eine exakte Positionsbestimmung geeignet ist.

Der Integritätsmechanismus in einem Satellitensystem 10 wie beispielsweise Galileo erfordert wie bereits eingangs erläutert eine entsprechende Bodeninfrastruktur zum Festellen von fehlerhaften Satellitensignalen und Verteilen entsprechender Integritätsinformationen im Satellitennavigationssystem 10. Um insbesondere diese Informationen möglichst schnell und effizient im System 10 zu verteilen, ist folgendes im System implementiert.

Die Beobachtungsstationen 14 empfangen fortlaufend die Satellitensignale 16. Mit anderen Worten beobachten die Stationen 14 die Signale 16 im Sinne von einem kontinuierlichen Empfangen und Verarbeiten von den Datenströmen, die mit den Satellitensignalen 16 von den einzelnen Satelliten 12 ausgesandt werden. Die von den Beobachtungsstationen 14 ausgeführten Beobachtungen können neben wichtigen in den Satellitensignalen 16 enthaltenen Informationen bereits Auswertungen der Signale 16 enthalten, die in den Beobachtungsstationen 14 vorgenommen werden, beispielsweise Auswertungen von Integritätsinformationen. Die Beobachtungen der Stationen 14 werden einer zentralen Prozessierungsstelle 18 des Systems 10 über ein Kommunikationsnetzwerk 22, insbesondere ein Echtzeit-Kommunikationsnetzwerk, zur weiteren Verarbeitung zugeführt.

Die zentrale Prozessierungsstelle 18 erhält dadurch zeitnah die Beobachtungen der Stationen 14 und kann basierend auf diesen Informationen 24 erzeugen, die wiederum an die Satelliten 12 und 16 übermittelt werden sollen. Hierzu sendet die zentrale Prozessierungsstelle 18 die erzeugten Informationen 24, beispielsweise eine globale Integritätswarnung bei mehreren fehlerhaften Satellitensignalen, an mindestens einen von allen Satelliten 12 ausgewählten Satelliten 16, der sich direkt im sichtbaren Bereich des Prozessierungsstelle 18 befindet. Dieser mindestens eine ausgewählte Satellit 16 empfängt die Informationen 24 von der zentralen Prozessierungsstelle. Der Empfang dieser Informationen 24 bewirkt im ausgewählten Satelliten, dass er zum Weiterleiten der Informationen 24 an alle zu ihm benachbarten Satelliten 12 veranlasst wird; hierbei und im Folgenden sind allerdings nicht nur die nächsten Nachbarn gemeint. Hierzu weist der ausgewählte Satellit 16 geeignete Sendeeinrichtungen in Form von einer oder mehreren speziellen Antennen auf, die derart ausgerichtet und ausgebildete sind, dass sie eine Abstrahlcharakteristik zum Abstrahlen der Informationen 24 an benachbarte Satelliten 12 auf demselben Orbit des ausgewählten Satelliten 16 oder auch auf anderen Orbits besitzen.

Die vorliegende Erfindung beschreibt also einen Ansatz für die Verteilung von Informationen in einem Satellitennavigationssystem insbesondere an die Nutzungssysteme (Endbenutzer), indem die Informationen direkt von einer zentralen Prozessierungsstelle zu ausgewählten Satelliten gesendet werden, und dann die Informationen von Satellit zu Satellit weitergereicht werden, bis schließlich genügenden viele Satelliten die Informationen an die Nutzungssysteme senden können, um sicherzustellen dass den Nutzungssystemen die Informationen mit einer genügenden hohen Kontinuität korrekt zur Verfügung gestellt werden können.

Insbesondere werden die Informationen von der zentralen Prozessierungsstelle zu einer Untermenge von Satelliten gesendet, die von dieser zentralen Prozessierungsstelle direkt sichtbar sind. Die so ausgewählten Satelliten senden dann die Informationen gleichzeitig an alle Satelliten, die von diesen Satelliten sichtbar sind. Dies kann beispielsweise mit einer einfachen Hornantenne erfolgen, welche bei einer speziellen Anregung im Zentrum ein Minimum in der Antennencharakteristik hat, und welche ein Maximum in genau oder zirka den Richtungen hat, in welchen die anderen Navigationssatelliten am weitesten entfernt sind. Darüber hinaus kann die Optimierung auch nur bezüglich der Elevation aber nicht bezüglich des Azimuts erfolgen. Auf diese Weise kann zum Bespiel im Fall von Galileo die Anzahl der Orte, von welchen Informationen für die Navigation zu den Satelliten gesendet werden müssen, von neun plus Anzahl der zentralen Stellen auf die Anzahl der zentralen Stellen reduziert werden.

Wenn alle Satelliten etwa die gleiche Orbithöhe haben, kann die Kommunikation zwischen den Satelliten über Antennen, die auf der Erdseite der Satelliten angebracht sind erfolgen. Dabei sollte darauf geachtet werden, dass die Sonnenkollektoren so ausgelegt sind, dass sie das Senden zu anderen Satelliten beziehungsweise das Empfangen von anderen Satelliten nicht behindern. Sollten die Satelliten auf deutlich unterschiedlichen Orbithöhen sein, so können mehrere Antennen pro Satellit für die Verbreitung von Information in einer Richtung installiert werden.

Das Kommunikationsnetzwerk, welches die Daten der einzelnen Beobachtungen zentralisiert, d.h. an die zentrale Prozessierungsstelle überträgt, kann weiter deutlich reduziert werden, wenn Integritätsinformation nicht zentral von der zentralen Prozessierungsstelle, sondern in jedem einzelnen Satelliten ermittelt werden. Dazu können gemäß einer Ausführungsform der Erfindung die am Boden von Beobachtungsstationen gemessenen Integritäts-relevanten Informationen gleich wieder an alle Satelliten, die von den Beobachtungsstationen sichtbar sind, gesendet werden. Auf diese Weise kann ein jeder Satellit seine eigene Integritätsinformation berechnen und das Kommunikationsnetzwerk kann nur noch so ausgelegt werden, dass die Orbits und die Uhrparameter bestimmt werden können, was keine harte Echtzeitanforderung mehr darstellt.

Zusammenfassend kann durch die Erfindung eine effiziente Informationsverteilung in einem Satellitennavigationssystem erzielt werden. Ferner können die Bodenkommunikationsnetzwerke eines Satellitennavigationssystems, welche aufwändig zu betreiben sind, durch die Erfindung deutlich reduziert werden. Zudem können durch die Berechnung der Integrität im Satelliten die Zeiten bis zum Alarm deutlich reduziert werden.

### Bezugszeichen

- 10: Satellitennavigationssystem
- 12: Satellit
- 14: Beobachtungsstation
- 16: Satellitensignal
- 18: zentrale Prozessierungsstelle
- 20: Nutzungssystem
- 22: Kommunikationsnetzwerk
- 24: Informationen, erzeugt von der zentralen Prozessierungsstelle 18
- 26: ausgewählter Satellit

## Patentansprüche

1. Verfahren zum effizienten Verteilen von Informationen in einem Satellitennavigationssystem (10), das
ein Satelliten-System, das eine Mehrzahl von Satelliten (12) umfasst,
ein Netzwerk von Beobachtungsstationen (14) zum Beobachten von Signalen (16) der Satelliten (12),
eine oder mehrere redundante zentrale Prozessierungsstellen (18) zum Auswerten von Beobachtungen der Beobachtungsstationen (14) und zum Erzeugen von Informationen basierend auf den Beobachtungen zum Verteilen an Nutzungssysteme (20), und
ein Kommunikationsnetzwerk (22) zum Übermitteln der Beobachtungen von den Beobachtungsstationen (14) an die eine oder die mehreren redundanten zentralen Prozessierungsstellen (18) aufweist,
**dadurch gekennzeichnet, dass**
die eine oder mehreren redundanten zentralen Prozessierungsstellen (18) die Informationen (24) an ausgewählte Satelliten (26) senden und
jeder der ausgewählten Satelliten (26) nach Empfang der Informationen diese an benachbarte Satelliten (14) sendet.

2. Verfahren nach Anspruch 1, **dadurch gekennzeichnet, dass**
die ausgewählten Satelliten (26) eine Untermenge von direkt von der zentralen Prozessierungsstelle (18) sichtbaren Satelliten aus der Mehrzahl von Satelliten (12) sind.

3. Verfahren nach Anspruch 1 oder 2, **dadurch gekennzeichnet, dass**
ein ausgewählter Satellit (26) nach Empfang der Informationen (24) diese gleichzeitig an alle Satelliten (12) sendet, die vom ausgewählten Satelliten (26) aus direkt sichtbar sind.

4. Verfahren nach Anspruch 1, 2 oder 3, **dadurch gekennzeichnet, dass**
ein ausgewählter Satellit (26) die empfangenen Informationen (24) über eine Antenne aussendet, die eine Antennencharakteristik mit einem Maximum in genau oder zirka den Richtungen hat, in welchen die benachbarten Satelliten (12) am weitesten entfernt sind.

5. Verfahren nach Anspruch 1, 2, 3 oder 4, **dadurch gekennzeichnet, dass**
ein ausgewählter Satellit (26) die empfangenen Informationen (24) über eine Antenne aussendet, die auf der Erdseite des Satelliten angebracht ist.

6. Verfahren nach Anspruch 1, 2, 3 oder 4, **dadurch gekennzeichnet, dass**
ein ausgewählter Satellit (26) die empfangenen Informationen (24) über mehrere Antennen aussendet.

7. Verfahren nach einem der vorhergehenden Ansprüche, **dadurch gekennzeichnet, dass**
jede Beobachtungsstation (14) ein empfangenes Satellitensignal oder mehrerer Satellitensignale oder alle empfangbaren Satellitensignale des Satellitensystems (16) auswertet und Informationen über die Auswertung an alle direkt sichtbaren Satelliten sendet, und
jeder Satellit anhand der empfangenen Informationen seine eigene Integritätsinformation und /oder die Integritätsinformation für andere Satelliten zu berechnen und zu verbreiten.

8. Vorrichtung zum effizienten Verteilen von Informationen in einem Satellitennavigationssystem (10), das
ein Satelliten-System, das eine Mehrzahl von Satelliten (12) umfasst,
ein Netzwerk von Beobachtungsstationen (14) zum Beobachten von Signalen der Satelliten (16),
eine oder mehrere redundante zentrale Prozessierungsstellen (18) zum Auswerten von Beoachtungen der Beobachtungsstationen (14) und zum Erzeugen von Informationen (24) basierend auf den Beobachtungen zum Verteilen an Nutzungssysteme (20), und
ein Kommunikationsnetzwerk (22) zum Übermitteln der Beobachtungen von den Beobachtungsstationen (14) an die eine oder die mehreren redundanten zentralen Prozessierungsstellen (18) aufweist,
**dadurch gekennzeichnet, dass**
die eine oder mehreren redundanten Prozessierungsstellen (18) ausgebildet sind, die Informationen (24) an ausgewählte Satelliten (26) zu senden und
jeder der ausgewählten Satelliten (26) ausgebildet ist, nach Empfang der Informationen (24) diese an benachbarte Satelliten (12) zu senden.

9. Vorrichtung nach Anspruch 8, **dadurch gekennzeichnet, dass**
die ausgewählten Satelliten (26) eine Untermenge von direkt von der zentralen Prozessierungsstelle (18) sichtbaren Satelliten aus der Mehrzahl von Satelliten (12) sind.

10. Vorrichtung nach Anspruch 8 oder 9, **dadurch gekennzeichnet, dass**
ein ausgewählter Satellit (26) ausgebildet ist, nach Empfang der Informationen diese gleichzeitig an alle Satelliten (12) zu senden, die vom ausgewählten Satelliten aus direkt sichtbar sind.

11. Vorrichtung nach Anspruch 8, 9 oder 10, **dadurch gekennzeichnet, dass**
ein ausgewählter Satellit (26) ausgebildet ist, die empfangenen Informationen über eine Antenne auszusenden, die eine Antennencharakteristik mit einem Maximum in genau oder zirka den Richtungen hat, in welchen die benachbarten Satelliten (12) am weitesten entfernt sind.

12. Vorrichtung nach Anspruch 8, 9, 10 oder 11, **dadurch gekennzeichnet, dass**
ein ausgewählter Satellit (26) ausgebildet ist, die empfangenen Informationen (24) über eine Antenne auszusenden, die auf der Erdseite des Satelliten angebracht ist.

13. Vorrichtung nach Anspruch 8, 9, 10 oder 11, **dadurch gekennzeichnet, dass**
ein ausgewählter Satellit (26) ausgebildet ist, die empfangenen Informationen über mehrere Antennen auszusenden.

14. Vorrichtung nach einem der Ansprüche 8 bis 13, **dadurch gekennzeichnet, dass** jede Beobachtungsstation (14) ausgebildet ist, ein empfangenes Satellitensignal oder mehrerer Satellitensignale oder alle empfangbaren Satellitensignale des Satellitensystems (16) auszuwerten und Informationen über die Auswertung an alle direkt sichtbaren Satelliten zu senden, und
jeder Satelliten ausgebildet ist, anhand der empfangenen Informationen seine eigene Integritätsinformation und/oder die Integritätsinformation für andere Satelliten zu berechnen und zu verbreiten.

15. Satellit, der zum Einsatz mit einer Vorrichtung nach einem der Ansprüche 8 bis 13 derart ausgebildet ist, dass er nach Empfang von Informationen von einer zentralen Prozessierungsstelle diese an benachbarte Satelliten über eine dafür vorgesehen Antenne aussenden kann.
